# EUROPÄISCHE PATENTSCHRIFT

(11) **EP 0 851 136 B1**
(45) Veröffentlichungstag und Bekanntmachung des Hinweises auf die Patenterteilung: **12.12.2001**
(21) Anmeldenummer: 97118028.6
(22) Anmeldetag: 17.10.1997
(51) Int. Cl.: F16D 13/75

(54) **Druckplattenbaugruppe, insbesondere für eine Kraftfahrzeug-Reibungskupplung mit automatischem Verschleissausgleich**
Pressure plate assembly for automotive vehicle with automatic wear adjusting device
Ensemble plateau de pression pour un embrayage à friction d'une voiture automobile avec rattrapage d'usure automatique.

(30) Priorität: 27.11.1996 DE 19649135
(43) Veröffentlichungstag der Anmeldung: 01.07.1998
(73) Patentinhaber: Mannesmann Sachs Aktiengesellschaft, 97424 Schweinfurt (DE)
(72) Erfinder: Bayer, Josef, Dipl.-Ing., 97491 Aidhausen (DE)

(56) Entgegenhaltungen:
- DE-A- 4 306 688
- GB-A- 2 187 520
- US-A- 4 738 344

## Beschreibung

Die vorliegende Erfindung betrifft eine Druckplattenbaugruppe, insbesondere für eine Kraftfahzeug-Reibungskupplung mit automatischem Verschleißausgleich, umfassend: ein Gehäuse, welches mit einem Schwungrad zur gemeinsamen Drehung um eine Drehachse verbindbar oder verbunden ist, eine mit dem Gehäuse drehfest verbundene und bezüglich des Gehäuses in axialer Richtung verlagerbare Anpreßplatte mit einer Reibfläche zur Anlage an Reibbelägen einer zwischen dem Schwungrad und der Anpreßplatte klemmbaren Kupplungsscheibe, einen Kraftspeicher, insbesondere Membranfeder, welcher zwischen dem Gehäuse und der Anpreßplatte wirkt und die Anpreßplatte in Richtung auf eine eingerückte Kupplungsstellung vorspannt, wobei der Kraftspeicher auf die Anpreßplatte unter Zwischenlagerung einer Verschleißausgleichsvorrichtung einwirkt, wenigstens einen an der Anpreßplatte angeordneten Spielgeber mit einem mit der Verschleißausgleichsvorrichtung zusammenwirkenden Betätigungshebelabschnitt und einem zum Erfassen von Verschleiß vorzugsweise mit dem Schwungrad zusammenwirkenden, eine im wesentlichen axiale Durchgangsöffnung in der Anpreßplatte durchsetzenden Verschleißerfassungsabschnitt, wobei der Spielgeber bezüglich der Anpreßplatte in der Durchgangsöffnung in axialer Richtung verschiebbar ist, und wenigstens einem Vorspannelement zum Erzeugen einer Krafteinwirkung auf den Spielgeber, um diesen zum axialen Fixieren des Spielgebers bezüglich der Anpreßplatte in Reibungsklemmsitz in der Durchgangsöffnung zu drücken.

Eine derartige Druckplattenbaugruppe ist aus der DE 4306688 A1 bekannt. In dieser bekannten Druckplattenbaugruppe wirkt zwischen einem freien Ende des Verschleißerfassungsabschnitts eines Spielgebers und der Anpreßplatte eine Schraubendruckfeder. Die Schraubendruckfeder ist derart angeordnet, daß ihre Längsachse bezüglich einer Längsachse der Durchgangsöffnung in der Anpreßplatte, und somit einer Längsachse des Verschleißerfassungsabschnitts des Spielgebers geneigt verläuft. Es wird somit am Verschleißerfassungsabschnitt ein Kippmoment um eine Achse quer zu dessen Längsachse erzeugt, so daß der Reibungsklemmsitz des Verschleißerfassungsabschnitts in der Durchgangsöffnung erzeugt wird. Um die Axialverschiebbarkeit des Spielgebers, d.h. des Verschleißerfassungsabschnitts, bei Auftreten von Verschleiß jedoch nicht zu beeinträchtigen, muß die von der Schraubendruckfeder vorzusehende Federdruckkraft relativ gering sein. Dies bedingt andererseits jedoch wiederum, daß die aufgrund der geneigten Feder hervorgerufene Reibungsklemmkraft nur von beschränktem Betrag ist. Im Betrieb von Kraftfahrzeug-Reibungskupplungen mit derartigen Spielgebern können jedoch Schwingungen auftreten, die dann, wenn sie im Resonanzschwingungsbereich des Spielgebers liegen, diesen ebenfalls zum Schwingen anregen und zu einer kurzzeitigen Auflösung des Reibungsklemmsitzes führen können. Es muß daher aus folgendem Grund auch eine axiale Kraftkomponente durch die Schraubendruckfedern auf den Spielgeber ausgeübt werden. Würde nämlich bei der kurzzeitigen Aufhebung des Reibungsklemmsitzes der Spielgeber ohne das Vorhandensein einer axialen Schubkraft durch die Bewegung oder Schwingung der Kupplung in axialer Richtung verschoben werden, insbesondere vom Schwungrad weg verschoben werden, so könnte er nachfolgend seinen Betrieb zur Verschleißerfassung nicht mehr korrekt ausführen. Die Schraubendruckfeder hat somit eine Doppelfunktion darin, daß sie einerseits das Kippmoment erzeugt, und daß sie andererseits die axiale Vorspannung für den Spielgeber auf das Schwungrad zu bildet.

Es ist demgegenüber die Aufgabe der vorliegenden Erfindung, eine Druckplattenanordnung vorzusehen, bei welcher wenigstens ein daran vorgesehener Spielgeber durch einfache und zuverlässig wirkende Mittel in den Reibungsklemmsitz vorgespannt werden kann.

Erfindungsgemäß wird diese Aufgabe durch eine Druckplattenbaugruppe, insbesondere für eine Kraftfahrzeug-Reibungskupplung mit automatischem Verschleißausgleich, gelöst, welche umfaßt: ein Gehäuse, welches mit einem Schwungrad zur gemeinsamen Drehung um eine Drehachse verbindbar oder verbunden ist, eine mit dem Gehäuse drehfest verbundene und bezüglich des Gehäuses in axialer Richtung verlagerbare Anpreßplatte mit einer Reibfläche zur Anlage an Reibbelägen einer zwischen dem Schwungrad und der Anpreßplatte klemmbaren. Kupplungsscheibe, einen Kraftspeicher, insbesondere Membranfeder, welcher zwischen dem Gehäuse und der Anpreßplatte wirkt und die Anpreßplatte in Richtung auf eine eingerückte Kupplungsstellung vorspannt, wobei der Kraftspeicher auf die Anpreßplatte unter Zwischenlagerung einer Verschleißausgleichsvorrichtung einwirkt, wenigstens einen an der Anpreßplatte angeordneten Spielgeber mit einem mit der Verschleißausgleichsvorrichtung zusammenwirkenden Betätigungshebelabschnitt und einem zum Erfassen von Verschleiß vorzugsweise mit dem Schwungrad zusammenwirkenden, eine im wesentlichen axiale Durchgangsöffnung in der Anpreßplatte durchsetzenden Verschleißerfassungsabschnitt, wobei der Spielgeber bezüglich der Anpreßplatte in der Durchgangsöffnung in axialer Richtung verschiebbar ist, und wenigstens einem Vorspannelement zum Erzeugen einer Krafteinwirkung auf den Spielgeber, um diesen zum axialen Fixieren des Spielgebers bezüglich der Anpreßplatte in Reibungsklemmsitz in der Durchgangsöffnung zu drücken.

Erfindungsgemäß ist dabei ferner vorgesehen, daß das Vorspannelement eine im wesentlichen orthogonal zur Drehachse gerichtete Krafteinwirkung auf den wenigstens einen Spielgeber ausübt.

Durch das erfindungsgemäße Vorspannelement wird also eine Krafteinwirkung hauptsächlich in einer Richtung orthogonal zur Drehachse erzeugt, d.h. in einer zur Drehachse orthogonalen Ebene. Da also das Vorspannelement praktisch keine Krafteinwirkung in axialer Richtung erzeugt, kann die durch das Vorspannelement ausgeübte Kraft hinsichtlich ihres Betrags beliebig derart vorgesehen werden, daß sie einen sicheren Reibungsklemmsitz des Verschleißerfassungsabschnitts in der Durchgangsöffnung in der Anpreßplatte gewährleistet; dies bedeutet, die Kraft kann gesetzt werden, ohne dabei berücksichtigen zu müssen, daß eine in axialer Richtung gerichtete Komponente den Betrieb des Spielgebers beeinflussen könnte. Insbesondere kann die Kraft derart gesetzt werden, daß selbst bei Auftreten von Schwingungsanregungen im Betrieb der Kupplung der Reibungsklemmsitz des Spielgebers nicht gelöst wird, daß also das Problem einer unbeabsichtigten Verschiebung des Spielgebers in der für ihn vorgesehenen Durchgangsöffnung nicht auftreten kann und somit eine Vorspannung in axialer Richtung nicht vorgesehen werden muß. Das Vorspannelement kann somit hinsichtlich der ihm zugeteilten wesentlichen Funktion des Vorspannens in den Reibungsklemmsitz optimal ausgelegt werden, ohne dabei auf weitere zusätzliche Funktionen achten zu müssen.

Vorteilhafterweise ist dabei vorgesehen, daß das Vorspannelement eine bezüglich der Drehachse radial, vorzugsweise radial nach außen, gerichtete Krafteinwirkung auf den wenigstens einen Spielgeber ausübt.

Um den in einer Druckplattenbaugruppe vorhandenen Bauraum möglichst effektiv nutzen zu können und ein Stören mit anderen Kupplungskomponenten, insbesondere der Kupplungsscheibe oder dergleichen, vermeiden zu können, wird vorgeschlagen, daß das Vorspannelement an dem Spielgeber an einer von der Reibfläche abgewandten Seite der Anpreßplatte angreift.

Vorzugsweise ist vorgesehen, daß das Vorspannelement an dem Verschleißerfassungsabschnitt des wenigstens einen Spielgebers angreift. Dazu kann das Vorspannelement ein an dem wenigstens einen Spielgeber angreifendes und sich an einem Außenumfangsbereich der Anpreßplatte abstützendes Vorspannfederelement umfassen. In einer besonders einfachen und kostengünstigen Ausgestaltung kann vorgesehen sein, daß das Vorspannelement ein federelastisch verformbares, im wesentlichen U-förmiges Federteil umfaßt mit einem ersten U-Schenkel, welcher an der von der Reibfläche abgewandten Seite der Anpreßplatte anordenbar ist und mit welchem das Federteil an dem Spielgeber angreift, einem zweiten U-Schenkel, welcher an der Reibflächenseite der Anpreßplatte anordenbar ist, und einem den ersten U-Schenkel und den zweiten U-Schenkel verbindenden Bodenabschnitt, welcher an einem Außenumfangsbereich der Anpreßplatte abstützbar ist. Insbesondere ist bei derartiger Ausgestaltung des Vorspannfederelements ein besonders einfacher Aufbau der Druckplattenbaugruppe gewährleistet, so daß auch der Zusammensetzvorgang vereinfacht werden kann.

Zur Erzeugung der Vorspannkraft kann vorgesehen sein, daß bei an dem Spielgeber angreifendem ersten U-Schenkel und an dem Außenumfangsbereich angreifendem Bodenabschnitt des Federteils dieses Federteil in einen vorgespannten Zustand gebracht ist, in welchem es eine nach radial außen gerichtete Kraft auf den Spielgeber ausübt.

Dabei kann das Federteil beispielsweise derart ausgebildet sein, daß in einem nicht an der Anpreßplatte angebrachten Zustand des Federteils ein zwischen dem ersten U-Schenkel und dem Bodenabschnitt gebildeter Winkel einen ersten Wert aufweist, welcher vorzugsweise kleiner als 90° ist, und daß bei an der Anpreßplatte angebrachtem und den wenigstens einen Spielgeber vorspannendem Federteil der Winkel einen zweiten Wert aufweist, welcher größer ist als der erste Wert und vorzugsweise im Bereich von 90° liegt.

Um eine besonders einfach herzustellende und sichere Zusammenwirkung zwischen Federteil und Spielgeber vorsehen zu können, wird vorgeschlagen, daß das Federteil in seinem ersten U-Schenkel eine Durchgangsöffnung aufweist, in welche der Verschleißerfassungsabschnitt des wenigstens einen Spielgebers einführbar ist und über welche das Federteil am Verschleißerfassungsabschnitt des wenigstens einen Spielgebers angreift.

Beispielsweise besteht aufgrund im Betrieb einer Kupplung auftretender Schwingungen oder Vibrationen die Gefahr, daß der Spielgeber selbst in der Durchgangsöffnung in der Anpreßplatte um eine zur Drehachse A im wesentlichen parallele Achse gedreht wird. Auch kann ein Drehmoment auf den mit einer Verschleißausgleichsvorrichtung zusammenwirkenden Betätigungshebelabschnitt ausgeübt werden, wenn die Verschleißausgleichsvorrichtung in einer Umfangsrichtung drehbare Segmente umfaßt, mit welchen der Betätigungshebelabschnitt zusammenwirkt. Um eine derartige unbeabsichtigte Drehung des Spielgebers zu vermeiden, wird vorgeschlagen, daß ferner Spielgeber-Drehsicherungsmittel an dem Vorspannelement vorgesehen sind zum Sichern des wenigstens einen Spielgebers gegen Drehung in der Durchgangsöffnung in der Anpreßplatte um eine zur Drehachse im wesentlichen parallele Achse.

In einer besonders einfach herzustellenden Ausführungsform kann hierzu vorgesehen sein, daß die Spielgeber-Drehsicherungsmittel wenigstens einen, vorzugsweise mit dem ersten U-Schenkel integral ausgebildeten und an dem Betätigungshebelabschnitt des wenigstens einen Spielgebers angreifenden Sicherungsabschnitt umfassen.

Auch das Vorspannelement kann derartigen Drehkrafteinwirkungen ausgesetzt werden, insbesondere in dem Fall, wenn es zur Drehsicherung des Spielgebers dient. Es ist dann vorteilhaft, wenn Federteil-Drehsicherungsmittel vorgesehen sind zum Sichern des Federteils gegen Drehung um eine zur Drehachse im wesentlichen parallele Achse.

Besonders einfach herzustellende und sicher wirkende Federteil-Drehsicherungsmittel können eine sich im wesentlichen radial erstreckende Vertiefung an der Anpreßplatte umfassen, in welche ein U-Schenkel des Federteils, vorzugsweise mit seinem radial inneren Endabschnitt, eingreift.

Beispielsweise kann vorgesehen sein, daß die Vertiefung an der von der Reibfläche abgewandten Seite der Anpreßplatte vorgesehen ist und daß der erste U-Schenkel des Federteils mit seinem radial inneren Endabschnitt in die Vertiefung eingreift.

Das Federteil kann in besonders einfacher und kostengünstiger Weise hergestellt werden, wenn es aus Federstahl oder dergleichen besteht.

Bei einem Spielgeber der mit seinem Verschleißerfassungsabschnitt eine Durchgangsöffnung in der Anpreßplatte durchsetzt und darin in Reibungsklemmsitz gehalten ist, wird, neben der durch das Vorspannelement erzeugten Vorspannkraft eine zusätzliche Vorspannkraft erzeugt, wenn die mit einer derartigen Druckplattenbaugruppe ausgestattete Kupplung sich dreht. Es wirkt dann nämlich auf den Spielgeber eine Fliehkraft ein. Da der Massenschwerpunkt des Spielgebers im allgemeinen auf der von der Reibfläche der Anpreßplatte abgewandten Seite liegt, insbesondere außerhalb der Durchgangsöffnung liegt, wird durch die Fliehkraft ein Kippmoment erzeugt. D. h. im rotierenden Zustand wird somit mit einer Erhöhung der Drehzahl auch das auf den Spielgeber einwirkende Kippmoment erhöht und somit der Reibungsklemmsitz verstärkt. Um nun eine derartige Fliehkrafteinwirkung auf den Spielgeber positiv ausnutzen zu können, wird gemäß der vorliegenden Erfindung vorgeschlagen, daß die Durchgangsöffnung für den Verschleißerfassungsabschnitt des wenigstens einen Spielgebers in der Anpreßplatte einen Klemmsitzabschnitt aufweist und daß der Klemmsitzabschnitt in axialer Richtung von der von der Reibfläche abgewandten Seite der Anpreßplatte auf die Reibflächenseite der Anpreßplatte zu verlagert angeordnet ist. Durch Verlagern des Reibungsklemmsitzabschnitts in Richtung auf die Reibflächenseite der Anpreßplatte zu wird der axiale Abstand zwischen dem Massenschwerpunkt des Spielgebers und dem Klemmsitzabschnitt im Vergleich zum Stand der Technik gemäß DE 43 06 688 A1 vergrößert. Insbesondere ist bei der Druckplattenanordnung gemäß diesem Dokument vorgesehen, daß der Klemmsitzabschnitt an der von der Reibfläche abgewandten Rückseite der Anpreßplatte angeordnet ist; dies ist dort insbesondere daher erforderlich, da zusätzlich noch zwischen der Anpreßplatte und dem freien Ende des Verschleißerfassungsabschnitts des Spielgebers die bereits angesprochene Schraubendruckfeder vorzusehen ist.

Die erfindungsgemäße Verlagerung dieses Klemmsitzabschnitts ermöglicht je nach Positionierung des Klemmsitzabschnitts in axialer Richtung die Auswahl einer gewünschten Fliehkraftunterstützung bei der Erzeugung der Vorspannkraft. Darüber hinaus wird auch der axiale Abstand zwischen dem erfindungsgemäßen Vorspannelement und dem Klemmsitzabschnitt vergrößert, wenn das Vorspannelement an der von der Reibfläche abgewandten Seite der Anpreßplatte am Spielgeber angreift. Es kann somit bei gleichbleibender Vorspannkraft durch das Vorspannelement aufgrund der verstärkten Hebelwirkung zusätzlich ein verbesserter Reibungsklemmsitz erzielt werden.

Dieser Effekt wird dann besonders stark wirksam, wenn der Klemmsitzabschnitt in der Durchgangsöffnung in der Anpreßplatte benachbart der Reibflächenseite der Anpreßplatte angeordnet ist, da dann die Hebelwirkung am stärksten ist.

Gemäß einer weiteren Ausgestaltung der vorliegenden Erfindung kann vorgesehen sein, daß die Durchgangsöffnung für den Verschleißerfassungsabschnitt des wenigstens einen Spielgebers in der Anpreßplatte einen Klemmsitzabschnitt aufweist und daß der Klemmsitzabschnitt in axialer Richtung von derjenigen Seite der Anpreßplatte, an welcher das Vorspannelement an dem wenigstens einen Spielgeber angreift, zu der jeweils anderen axialen Seite der Anpreßplatte verlagert angeordnet ist. Bei einer derartigen Ausgestaltung ist sichergestellt, daß die Federkraftwirkung des Vorspannelements aufgrund des axialen Abstands zwischen dem Angriffspunkt des Vorspannelements am Spielgeber und dem Klemmsitzabschnitt immer in optimaler Weise ausgenützt wird.

Es wird hier darauf hingewiesen, daß die axiale Verschiebung des Klemmsitzabschnitts zur Erzeugung einer Hebelwirkung zwischem dem Vorspannelement und dem Klemmsitzabschnitt oder/und zur Erzeugung einer Hebelwirkung durch den axialen Abstand zwischen dem Schwerpunkt des Spielgebers und dem Klemmsitzabschnitt in Verbindung mit einem zur Drehachse orthogonal wirkenden Vorspannelement vorteilhaft, jedoch nicht zwingend ist. Vielmehr können auch Krafteinwirkungen auf den Spielgeber, welche zur Drehachse bzw. zu einer Spielgeberlängsachse geneigt gerichtet sind, die gleiche Erzeugung eines Kippmoments und eine dementsprechend sichere Klemmsitzwirkung hervorrufen.

Die vorliegende Erfindung betrifft ferner eine Druckplattenbaugruppe, bei der das Vorspannelement ein federelastisch verformbares, vorzugsweise im wesentlichen U-förmig ausgebildetes Federklammerteil umfaßt.

Die vorliegende Erfindung wird nachfolgend an Hand bevorzugter Ausführungsformen in bezug auf die beiliegenden Zeichnungen detailliert beschrieben. Es zeigt:
- Fig. 1: eine Teillängsschnittansicht durch eine erfindungsgemäße Druckplattenbaugruppe;
- Fig. 2: eine Draufsicht auf ein Federteil;
- Fig. 3: eine Ansicht des Federteils in Blickrichtung III in Fig. 4;
- Fig. 4: eine Seitenansicht des Federteils.

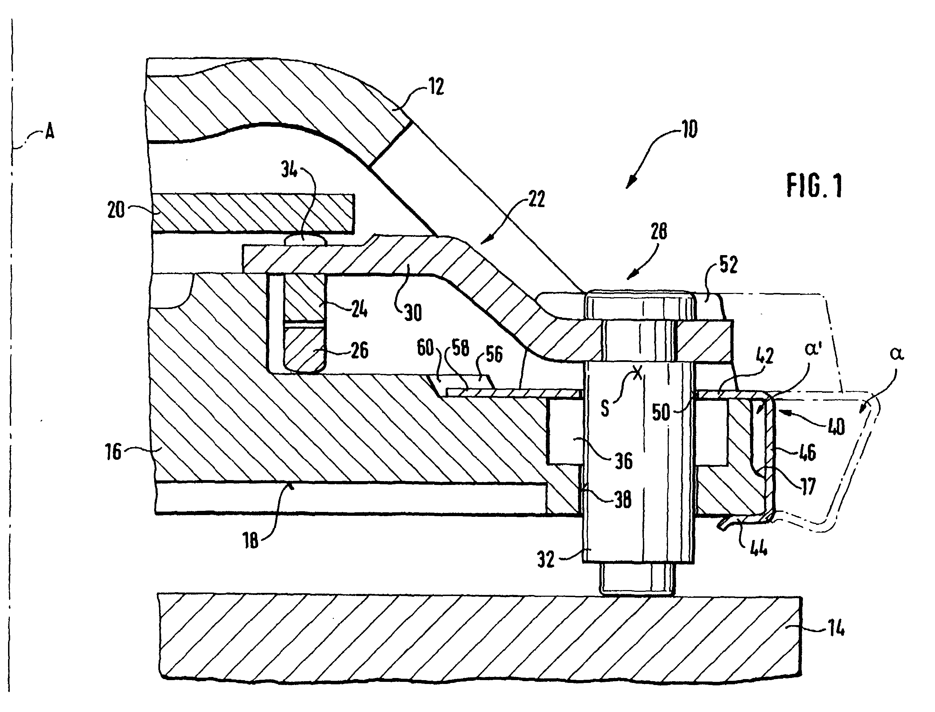

In Fig. 1 ist eine Druckplattenanordnung allgemein mit 10 bezeichnet. Die Druckplattenanordnung 10 umfaßt ein Gehäuse 12, welches mit einem in Fig. 1 nur schematisch dargestellten Schwungrad 14 in einem Außenumfangsbereich fest verbunden und um eine Drehachse A gemeinsam drehbar ist.

Im Gehäuse 12 ist eine Anpreßplatte 16 angeordnet, welche mit dem Gehäuse 12 durch nicht dargestellte Tangentialblattfedern drehfest verbunden, jedoch bezüglich des Gehäuses 12 axial verlagerbar ist. Die Anpreßplatte 16 weist eine Reibfläche 18 auf, welche im eingerückten Zustand der Kupplung eine Kupplungsscheibe (nicht dargestellt) gegen das Schwungrad 14 preßt.

Die Druckplattenbaugruppe 10 umfaßt ferner eine Membranfeder 20, welche sich an einem radial inneren Abschnitt am Gehäuse abstützt und welche an einem radial äußeren Abschnitt über eine Verschleißausgleichsvorrichtung 22 an der Anpreßplatte 16 anliegt. Die Verschleißausgleichsvorrichtung 22 umfaßt zwei Nachstellringe 24, 26, welche um die Achse A drehbar und bezüglich einander verschiebbar sind. Die Verschleißausgleichsvorrichtung 22 ist von bekanntem Aufbau, bei dem die Nachstellringe 24, 26 über jeweilige Schrägflächen aneinander anliegen und bei Relativverdrehung zueinander durch gegenseitiges Abgleiten an den Schrägflächen zu einer axialen Verlängerung der Verschleißausgleichsvorrichtung 22 führen. Die Ringe 24, 26 sind durch in der Figur nicht dargestellte Federn gegeneinander vorgespannt. Im eingerückten Zustand sind die Nachstellringe 24, 26 durch die Membranfeder 20 derart beaufschlagt, daß eine axiale Verlängerung der Verschleißausgleichsvorrichtung 22 nicht hervorgerufen wird.

Es ist ferner ein Spielgeber 28 mit einem Betätigungshebelabschnitt 30 und einem Verschleißerfassungsabschnitt 32 vorgesehen. Der Betätigungshebelabschnitt 30 erstreckt sich nach radial einwärts und liegt mit seinem inneren Ende auf dem membranfedernahen Nachstellring 24 auf. Er greift insbesondere in eine in diesem Nachstellring vorgesehene Vertiefung 34 ein. Mit seinem radial äußeren Ende ist der Betätigungshebelabschnitt 30 mit dem Verschleißerfassungsabschnitt 32 fest verbunden. Der Verschleißerfassungsabschnitt erstreckt sich durch eine axiale Durchgangsöffnung 36 in der Anpreßplatte 16 hindurch und liegt mit seinem freien Ende an dem Schwungrad 14 zur Verschleißerfassung an.

Die Durchgangsöffnung 36 weist einen Klemmsitzabschnitt 38 auf, der hinsichtlich der Durchgangsöffnung 36 axial im Bereich der Reibfläche 18 der Anpreßplatte 16 angeordnet ist.

Es ist ferner ein Federteil 40 vorgesehen, das einen nahezu U-förmigen Querschnitt aufweist. Das Federteil 40 weist einen ersten U-Schenkel 42, einen zweiten U-Schenkel 44 und einen diese U-Schenkel verbindenden Bodenabschnitt 46 auf. Der erste U-Schenkel 42 ist derart angeordnet, daß er an der von der Reibfläche 18 abgewandten Seite der Anpreßplatte 16 an der Anpreßplatte anliegt. Der zweite U-Schenkel 44 liegt an der Anpreßplatte 16 auf der Reibflächenseite an. Der Bodenabschnitt 46 liegt an einem Außenumfangsabschnitt 17 der Anpreßplatte 16 an.

Wie in Fig. 1 ferner zu erkennen, weist der erste U-Schenkel 42 eine Durchgangsöffnung 50 auf, durch welche der Verschleißerfassungsabschnitt 32 des Spielgebers 28 hindurchgeschoben ist. Der zweite U-Schenkel 44 ist hinsichtlich seiner Erstreckung deutlich kürzer als der erste U-Schenkel 42, so daß er radial nicht bis zu dem Bereich der Durchgangsöffnung 36, d. h. dem Verschleißerfassungsabschnitt 32, reicht.

In Fig. 1 ist das Federteil 40 in zwei Stellungen dargestellt. Die mit durchgezogenen Linien dargestellte Stellung entspricht einer an der Anpreßplatte 16 angebrachten Stellung, in welcher das Federteil 40 den Spielgeber 28 in seinen Reibungsklemmsitz im Klemmsitzabschnitt 38 der Durchgangsöffnung 36 vorspannt. Die mit gestrichelten Linien dargestellte Stellung entspricht einer Stellung unmittelbar vor dem vollständigen Aufschieben des Federteils 40 auf die Anpreßplatte 16.

Man erkennt in Fig. 1, daß ein Winkel α, welcher zwischen dem ersten U-Schenkel 42 und dem Bodenabschnitt 46 gebildet ist, wenn das Federteil 40 noch nicht vollständig auf die Anpreßplatte 16 aufgeschoben ist, kleiner als 90° ist, beispielsweise im Bereich von 60 bis 70° liegt. Ist das Federteil 40 dann vollständig auf die Anpreßplatte 16 aufgschoben und nachfolgend der Spielgeber 22 mit seinem Verschleißerfassungsabschnitt 32 durch die Durchgangsöffnung 50 im Federteil 40 und die Durchgangsöffnung 36 in der Anpreßplatte 16 hindurchgeführt, so ist der Winkel α' zwischen dem ersten U-Schenkel 42 und dem Bodenabschnitt 46 nunmehr vergrößert und liegt vorzugsweise im Bereich von 90°. Da das Federteil 40 beispielsweise aus Federstahl oder dergleichen hergestellt ist, d.h. federelastisch verformbar ist, wird durch dieses aufgespreizte Federteil 40, das sich mit seiner Durchgangsöffnung 50 am Spielgeber 28 abstützt und mit seinem Bodenabschnitt 46 am Außenumfangsbereich der Anpreßplatte 16 abstützt, ein Kippmoment des Spielgebers 28 im Klemmsitzabschnitt 38 und im Uhrzeigersinn erzeugt. Insbesondere ist in Fig. 1 erkennbar, daß durch das Federteil 40 der Spielgeber 28 lediglich einer in radialer Richtung bezüglich der Drehachse A gerichteten Krafteinwirkung ausgesetzt wird. D. h. das Federteil 40 erzeugt keine Krafteinwirkung in axialer Richtung. Dies hat zur Folge, daß die Verschleißerfassungscharakteristik des Spielgebers 28 durch auf ihn einwirkende Axialschubkräfte nicht beeinträchtigt wird und daß darüber hinaus die Radialvorspannkraft durch das Federteil 40 derart eingestellt werden kann, daß in allen Betriebszuständen einer mit einer derartigen Druckplattenbaugruppe 10 ausgestatteten Kraftfahrzeug-Reibungskupplung der Reibungsklemmsitz des Spielgebers 28 nicht in unbeabsichtigter Weise gelöst werden kann. Wichtig ist dabei also, daß das Federteil 40 in einer Richtung im wesentlichen orthogonal zu einer Verschieberichtung des Verschleißerfassungsabschnitts 32 in der Durchgangsöffnung 36 wirkt.

Aus Fig. 1 ist ferner erkennbar, daß zwischen einem mit F bezeichneten Massenschwerpunkt des Spielgebers 28 und dem Klemmsitzabschnitt 38 in der Durchgangsöffnung 36 ein relativ großer axialer Abstand vorhanden ist. Dies führt einerseits dazu, daß selbst ein hinsichtlich seiner Federkraft relativ schwach ausgebildetes Federteil 40 aufgrund der relativ großen Hebelwirkung eine starke Reibungsklemmsitzwirkung hervorrufen kann. Zusätzlich kann aufgrund dieses Hebeleffekts aber auch die im Betrieb einer Kupplung auftretende Fliehkraft zur Verstärkung der Reibungsklemmsitzwirkung beitragen. Diese Wirkung wird umso größer, je größer der axiale Abstand zwischen dem Massenschwerpunkt S und dem Klemmsitzabschnitt 38 ist. Durch geeignete Auswahl der axialen Lage des Klemmsitzabschnitts in der Durchgangsöffnung 36 läßt sich die Reibungsklemmsitzwirkung an gewünschte Betriebscharakteristiken anpassen. D. h. je nach axialer Lage des Klemmsitzabschnitts kann einerseits die durch das Federteil 40 vorgesehene Klemmkraft verstärkt werden und andererseits die durch die Fliehkraft zusätzlich bei Drehung der Kupplung hervorgerufene Klemmkraft verstärkt bzw. verringert werden, wenn der Klemmabschnitt 38 aus der in Fig. 1 dargestellten Positionierung näher zur von der Reibfläche 18 abgewandten Seite der Anpreßplatte 16 verschoben wird.

Wie bereits erwähnt, greift der Betätigungshebelabschnitt 30 mit seinem radial inneren Ende in eine Ausnehmung 34 im membranfederseitigen Nachstellring 24 ein. Dies hat den Grund, daß damit vermieden wird, daß zwischen dem Betätigungshebelabschnitt 30 und der sich ebenfalls an dem Nachstellring 24 abstützenden Membranfeder 20 ein gegenseitiges Stören auftritt. Darüber hinaus trägt dies zu einer Drehsicherung des Nachstellrings 24 bei, da dieser somit durch den Betätigungshebelabschnitt 30 in Umfangsrichtung festgelegt ist und zur Verschleißnachstellung dann der anpreßplattenseitige Nachstellring 26 bezüglich des Nachstellrings 24 verdreht wird. Der allgemeine Betrieb derartiger Verschleißausgleichsvorrichtungen 22 ist im Stand der Technik bekannt, so daß auf eine detaillierte Beschreibung hier verzichtet wird.

Um jedoch zu vermeiden, daß bei Durchführung einer Verschleißnachstellung dennoch der Ring 24 sich in Umfangsrichtung dreht und dabei den Betätigungshebelabschnitt mitnimmt und somit den gesamten Spielgeber 28 in der Durchgangsöffnung 36 dreht, ist bei der erfindungsgemäßen Druckplattenbaugruppe ferner eine Drehsicherung für den Spielgeber 28 vorgesehen.

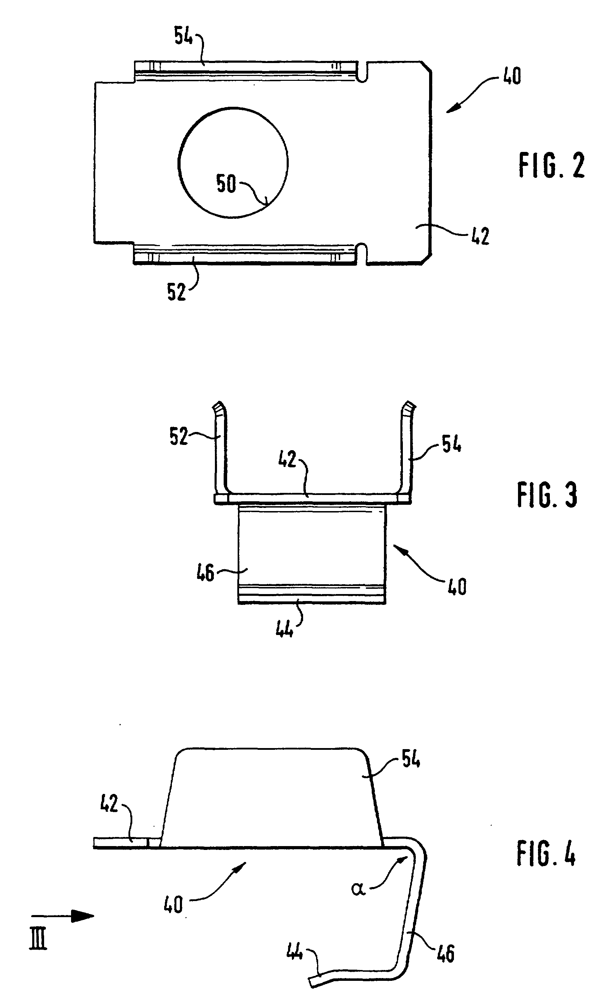

Wie in Fig. 1 und auch in den Fig. 2 bis 4 erkennbar, sind am ersten U-Schenkel 42 des Federteils 40 zwei nach oben abstehende Wandungsabschnitte 52, 54 vorgesehen. Der seitliche Abstand zwischen den Wandungsabschnitten 52, 54, welcher näherungsweise der Breite des Federteils 40 entspricht, ist derart gewählt, daß er ungefähr der Breite des Spielgebers 28, d.h. des Betätigungshebelabschnitts 30 entspricht. Durch die Wandungsabschnitte 52, 54, welche für den Betätigungshebelabschnitt 30 seitliche Anschläge bilden, und aufgrund der Tatsache, daß der Verschleißerfassungsabschnitt 32 des Spielgebers 28 durch die Durchgangsöffnung 50 im Federteil 40 hindurchgeführt ist, ist eine Drehung des Spielgebers 28 bezüglich des Federteils 40 somit nicht möglich.

Es sei hier darauf verwiesen, daß die Wandungsabschnitte anders ausgebildet sein können. Beispielsweise ist es möglich, lediglich einen derartigen Wandungsabschnitt oder axial vorspringenden Teil an dem Federteil 40 vorzusehen, der nach oben absteht und dann in eine Gegenöffnung im Spielgeber, d.h. im Betätigungshebelabschnitt 30 eingreift. Es ist jedoch die in den Figuren dargestellte Ausführungsform bevorzugt, da diese keine konstruktiven Änderungen des Betätigungshebelabschnitts 30 bedingt. Dieser Betätigungshebelabschnitt 30 kann dann derart ausgeführt werden, wie es für seine Funktion erforderlich und am besten ist. Insbesondere kann durch das Vermeiden von irgendwelchen Öffnungen im Betätigungshebelabschnitt 30 eine Schwächung desselben verhindert werden.

Um ferner zu verhindern, daß das Federteil 40, welches, wie bereits beschrieben, eine Drehsicherung für den Spielgeber 28 vorsieht, sich zusammen mit dem Spielgeber 28 dreht, ist in der Anpreßplatte 16 eine sich im wesentlichen radial erstrekkende Vertiefung 56 ausgebildet, in welche ein radial inneres Ende 58 des ersten U-Schenkels 42 eingreift. Die Vertiefung 56 ist in Umfangsrichtung durch Seitenwandungen begrenzt, von welchen in Fig. 1 nur eine 60 dargestellt ist. Zwischen den Seitenwandungen ist das radial innere Ende 58 des ersten U-Schenkels 42 in Umfangsrichtung festgelegt. Somit wird, wenn das Federteil 40 auf die Anpreßplatte 16 aufgeschoben ist und der Spielgeber 28 mit seinem Verschleißerfassungsabschnitt 32 durch die Durchgangsöffnung 50 im Federteil 40 und die Durchgangsöffnung 36 in der Anpreßplatte 16 hindurchgeführt ist, aufgrund der Vertiefung 56 und des in diese eingreifenden ersten U-Schenkels 42 eine Verdrehung des Federteils 40 auch bei Drehkrafteinwirkung auf den Betätigungshebelabschnitt 30 des Spielgebers 28 vermieden.

Obgleich in der vorangehenden Beschreibung eine Druckplattenbaugruppe mit lediglich einem derartigen Spielgeber 28 beschrieben worden ist, ist es selbstverständlich, daß entlang des Umfangs der Anpreßplatte 16 mehrere derartiger Spielgeber vorgesehen sein können.

Durch die vorliegende Erfindung ist eine Druckplattenbaugruppe geschaffen, bei welcher mit äußerst einfachen Mitteln, nämlich dem Federteil, welches lediglich in radialer Richtung auf den Spielgeber einwirkt, eine zuverlässige Fixierung des Spielgebers durch Reibungsklemmsitz an der Anpreßplatte geschaffen ist. Da Axialkrafteinwirkungen durch das Federteil auf den Spielgeber vermieden sind, kann die durch das Federteil 40 vorzusehende Krafteinwirkung auf den Spielgeber auf einen für die Erzeugung des Reibungsklemmsitzes optimalen Wert gesetzt werden, ohne dabei berücksichtigen zu müssen, daß zu große Axialkrafteinwirkungen vermieden werden müssen, um nicht die Verschleißerfassungscharakteristik des Spielgebers zu beeinträchtigen. Durch das Federteil ist die erfindungsgemäße Druckplattenanordnung äußerst leicht zusammenzusetzen, da nicht, wie beim Stand der Technik, vor dem Zusammensetzen Schraubendruckfedern in einem vorgespannten Zustand gehalten werden müssen und nachfolgend durch Festlegen irgendwelcher Bolzenkopfelemente an der Anpreßplatte gesichert werden müssen. Es muß lediglich das Federteil 40 in radialer Richtung auf die Anpreßplatte geschoben werden und nachfolgend der Spielgeber mit seinem Verschleißerfassungsabschnitt in die Durchgangsöffnungen im Federteil und in der Anpreßplatte eingeführt werden.

Da bei der erfindungsgemäßen Druckplattenbaugruppe ferner ein axialer Abstand zwischen dem Massenschwerpunkt des Spielgebers und dem Klemmsitzabschnitt der Anpreßplatte vorgesehen ist, kann einerseits eine relativ geringe Krafteinwirkung durch das Federteil zu einer sehr starken Reibungsklemmung des Spielgebers in dem Klemmsitzabschnitt führen. Andererseits wird es dadurch ermöglicht, daß auch die im Betrieb auftretende Fliehkrafteinwirkung auf den Massenschwerpunkt des Spielgebers in Zusammenwirkung mit dem erzeugten Hebel die Reibungsklemmwirkung verstärkt. Durch geeignet ausgewählte axiale Positionierung des Klemmsitzabschnittes ist es somit möglich, eine oder beide der vorangehend erwähnten Krafteinwirkungen (durch das Federteil oder durch Fliehkraftwirkung) in geeignetem Maße zur Erzeugung des Reibungsklemmsitzes heranzuziehen.

Obgleich vorangehend die erfindungsgemäße Druckplattenanordnung derart beschrieben und dargestellt ist, daß sie für eine Kupplung des gedrückten Typs ausgebildet ist, ist das Prinzip der Erfindung in für den Fachmann selbstverständlicher Art und Weise auch bei Kupplungen des gezogenen Typs anwendbar, bei welchen derartige Spielgeber zur Verschleißerfassung und zum Verschleißausgleich vorgesehen sind.

## Patentansprüche

1. Druckplattenbaugruppe, insbesondere für eine Kraftfahrzeug-Reibungskupplung mit automatischem Verschleißausgleich, umfassend:
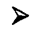 ein Gehäuse, welches mit einem Schwungrad (14) zur gemeinsamen Drehung um eine Drehachse (A) verbindbar oder verbunden ist,
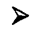 eine mit dem Gehäuse (12) drehfest verbundene und bezüglich des Gehäuses (12) in axialer Richtung verlagerbare Anpressplatte (16) mit einer Reibfläche (18) zur Anlage an Reibbelägen einer zwischen dem Schwungrad (14) und der Anpressplatte (16) klemmbaren Kupplungsscheibe,
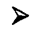 einen Kraftspeicher (20), insbesondere Membranfeder (20), welcher zwischen dem Gehäuse (12) und der Anpressplatte (16) wirkt und die Anpresslatte (16) in Richtung auf eine eingerückte Kupplungsstellung vorspannt, wobei der Kraftspeicher (20) auf die Anpressplatte (16) unter Zwischenlagerung einer Verschleißausgleichsvorrichtung (22) einwirkt,
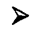 wenigstens einen an der Anpressplatte (16) angeordneten Spielgeber (28) mit einem mit der Verschleißausgleichsvorrichtung (22) zusammenwirkenden Betätigungshebelabschnitt (30) und einem zum Erfassen von Verschleiß vorzugsweise mit dem Schwungrad (14) zusammenwirkenden, eine im Wesentlichen axiale Durchgangsöffnung (36) in der Anpressplatte (16) durchsetzenden Verschleißerfassungsabschnitt (32), wobei der Spielgeber (28) bezüglich der Anpressplatte (16) in der Durchgangsöffnung (36) in axialer Richtung verschiebbar ist, und wenigstens einem Vorspannelement (40) zum Erzeugen einer Krafteinwirkung auf den Spielgeber (28), um diesen zum axialen Fixieren des Spielgebers (28) bezüglich der Anpressplatte (16) in Reibungsklemmsitz in der Durchgangsöffnung (36) zu drücken,
**dadurch gekennzeichnet,**
**dass** das Vorspannelement (40) eine im Wesentlichen orthogonal zur Drehachse (A) gerichtete Krafteinwirkung auf den wenigstens einen Spielgeber (28) ausübt.

2. Druckplattenbaugruppe nach Anspruch 1,
**dadurch gekennzeichnet,**
**dass** das Vorspannelement (40) eine bezüglich der Drehachse (A) radial, vorzugsweise radial nach außen, gerichtete Krafteinwirkung auf den wenigstens einen Spielgeber (28) ausübt.

3. Druckplattenbaugruppe nach Anspruch 1 oder 2,
**dadurch gekennzeichnet,**
**dass** das Vorspannelement (40) an dem Spielgeber (28) an einer der Reibfläche (18) abgewandten Seite der Anpressplatte (16) angreift.

4. Druckplattenbaugruppe nach Anspruch 3,
**dadurch gekennzeichnet,**
**dass** das Vorspannelement (40) an dem Verschleißerfassungsabschnitt (32) des wenigstens einen Spielgebers (28) angreift.

5. Druckplattenbaugruppe nach Anspruch 3 oder 4,
**dadurch gekennzeichnet,**
**dass** das Vorspannelement (40) ein an dem wenigstens einen Spielgeber (28) angreifendes und sich an einem Außenumfangsbereich (17) der Anpressplatte (16) abstützendes Vorspannfederelement umfasst.

6. Druckplattenbaugruppe nach Anspruch 5,
**dadurch gekennzeichnet,**
**dass** das Vorspannelement (40) ein federelastisch verformbares, im Wesentlichen U-förmiges Federteil (40) umfasst mit einem ersten U-Schenkel (42), welcher an der von der Reibfläche (18) abgewandten Seite der Anpressplatte (16) anordenbar ist und mit welchem das Federteil (40) an dem Spielgeber (28) angreift, einem zweiten U-Schenkel (44), welcher an der Reibflächenseite der Anpressplatte (16) anordenbar ist, und einem den ersten U-Schenkel (42) und den zweiten U-Schenkel (44) verbindenden Bodenabschnitt (46), welcher an einem Außenumfangsbereich (17) der Anpressplatte (16) abstützbar ist.

7. Druckplattenbaugruppe nach Anspruch 6,
**dadurch gekennzeichnet,**
**dass** bei an dem Spielgeber (28) angreifendem ersten U-Schenkel (42) und an dem Außenumfangsbereich (17) angreifendem Bodenabschnitt (46) des Federteils (40) dieses Federteil (40) in einen vorgespannten Zustand gebracht ist, in welchem es eine nach radial außen gerichtete Kraft auf den Spielgeber (28) ausübt.

8. Druckplattenbaugruppe nach Anspruch 7,
**dadurch gekennzeichnet,**
**dass** in einem nicht an der Anpressplatte (16) angebrachten Zustand des Federteils (40) ein zwischen dem ersten U-Schenkel (42) und dem Bodenabschnitt (46) gebildeter Winkel einen ersten Wert (α) aufweist, welcher vorzugsweise kleiner als 90° ist, und dass bei an der Anpressplatte (16) angebrachtem Federteil (40) der Winkel einen zweiten Wert (α') aufweist, welcher größer ist als der erste Wert und vorzugsweise im Bereich von 90° liegt.

9. Druckplattenbaugruppe nach Anspruch 1,
**dadurch gekennzeichnet,**
**dass** das Federteil (40) in seinem ersten U-Schenkel (42) eine Durchgangsöffnung (50) aufweist, in welche der Verschleißerfassungsabschnitt (32) des wenigstens einen Spielgebers (28) einführbar ist und über welche das Federteil (40) am Verschleißerfassungsabschnitt (32) des wenigstens einen Spielgebers (28) angreift.

10. Druckplattenbaugruppe nach einem der Ansprüche 1 bis 9, ferner umfassend Spielgeber-Drehsicherungsmittel (52,54) an dem Vorspannelement (40) zum Sichern des wenigstens einen Spielgebers (28) gegen Drehung in der Durchgangsöffnung (36) in der Anpressplatte (16) um eine zur Drehachse (A) im wesentlichen parallele Achse.

11. Druckplattenbaugruppe nach Anspruch 6 und nach Anspruch 10,
**dadurch gekennzeichnet,**
**dass** die Spielgeber-Drehsicherungsmittel (52,54) wenigstens einen vorzugsweise mit dem ersten U-Schenkel (42) integral ausgebildeten und an dem Betätigungshebelabschnitt (30) des wenigstens einen Spielgebers (28) angreifenden Sicherungsabschnitt (52,54) umfassen.

12. Druckplattenbaugruppe nach Anspruch 6 und gewünschtenfalls einem weiteren der vorangehenden Ansprüche, ferner umfassend Federteil-Drehsicherungsmittel (56,58) zum Sichern des Federteils (40) gegen Drehung um eine zur Drehachse (A) im Wesentlichen parallele Achse.

13. Druckplattenbaugruppe nach Anspruch 12,
**dadurch gekennzeichnet,**
**dass** die Federteil-Drehsicherungsmittel (56,58) eine sich im Wesentlichen radial erstreckende Vertiefung (56) an der Anpressplatte (16) umfassen, in welche ein U-Schenkel (42) des Federteils (40), vorzugsweise mit seinem radial inneren Endabschnitt (58), eingreift.

14. Druckplattenbaugruppe nach Anspruch 13,
**dadurch gekennzeichnet,**
**dass** die Vertiefung (56) an der von der Reibfläche (18) abgewändten Seite der Anpressplatte (16) vorgesehen ist, und dass der erste U-Schenkel (42) des Federteils (40) mit seinem radial inneren Endabschnitt (58) in die Vertiefung 56) eingreift.

15. Druckplattenbaugruppe nach Anspruch 6 und gewünschtenfalls einem weiteren der vorhergehenden Ansprüche,
**dadurch gekennzeichnet,**
**dass** das Federteit (40) aus Federstahl oder dergleichen besteht.

16. Druckplattenbaugruppe nach Anspruch 1,
**dadurch gekennzeichnet,**
**dass** die Durchgangsöffnung (36) für den Verschleißerfassungsabschnitt (32) des wenigstens einen Spielgebers (28) in der Anpressplatte (16) einen Klemmsitzabschnitt (38) aufweist, und dass der Klemmsitzabschnitt (38) in axialer Richtung von der von der Reibfläche (18) abgewandten Seite der Anpressplatte (16) auf die Reibflächenseite der Anpressplatte (16) zu verlagert angeordnet ist.

17. Druckplattenbaugruppe nach Anspruch 16,
**dadurch gekennzeichnet,**
**dass** der Klemmsitzabschnitt (38) in der Durchgangsöffnung (36) in der Anpressplatte (16) benachbart der Reibflächenseite der Anpressplatte 16) angeordnet ist.

18. Druckplattenbaugruppe nach Anspruch 1,
**dadurch gekennzeichnet,**
**dass** die Durchgangsöffnung für den Verschleißerfassungsabschnitt des wenigstens einen Spielgebers in der Anpressplatte einen Klemmsitzabschnitt aufweist, und dass der Klemmsitzabschnitt in axialer Richtung von derjenigen Seite der Anpressplatte, an welcher das Vorspannelement an dem wenigstens einen Spielgeber angreift, zu der jeweils anderen axialen Seite der Anpressplatte verlagert angeordnet ist.

19. Druckplattenbaugruppe nach Anspruch 1,
**dadurch gekennzeichnet,**
**dass** das Vorspannelement (40) ein federelastisch verformbares, vorzugsweise im Wesentlichen U-förmig ausgebildetes Federklammerteif (40) umfasst.

## Claims

1. Thrust-plate subassembly, in particular for a motor vehicle friction clutch with automatic wear compensation, comprising:
• a housing which is connectable or connected to a flywheel (14) for joint rotation about an axis of rotation (A),
• a pressure plate (16) connected fixedly in terms of rotation to the housing (12) and displaceable in the axial direction with respect to the housing (12), with a friction surface (18) for coming to bear on frictional linings of a clutch disc clampable between the flywheel (14) and the pressure plate (16),
• a force accumulator (20), in particular a diaphragm spring (20), which acts between the housing (12) and the pressure plate (16) and prestresses the pressure plate (16) in the direction of an engaged clutch position, the force accumulator (20) acting on the pressure plate (16), with a wear-compensating device (22) being interposed,
• at least one play transmitter (28) arranged on the pressure plate (16), with an actuating-lever portion (30) cooperating with the wear-compensating device (22) and with a wear detection portion (32) cooperating preferably with the flywheel (14) for the detection of wear and passing an essentially axial passage orifice (36) in the pressure plate (16), the play transmitter (28) being displaceable in the axial direction with respect to the pressure plate (16) in the passage orifice (36), and with at least one prestressing element (40) for generating a force action on the play transmitter (28), in order to press the latter into a frictional clamping fit in the passage orifice (36) for the purpose of fixing the play transmitter (28) axially with respect to the pressure plate (16),
**characterized in that** the prestressing element (40) exerts on the at least one play transmitter (28) a force action directed essentially orthogonally to the axis of rotation (A).

2. Thrust-plate subassembly according to Claim 1, **characterized in that** the prestressing element (40) exerts on the at least one play transmitter (28) a force action directed radially, preferably radially outwards, with respect to the axis of rotation (A).

3. Thrust-plate subassembly according to Claim 1 or 2, **characterized in that** the prestressing element (40) engages on the play transmitter (28) on a side of the pressure plate (16) which faces away from the friction surface (18).

4. Thrust-plate subassembly according to Claim 3, **characterized in that** the prestressing element (40) engages on the wear detection portion (32) of the at least one play transmitter (28).

5. Thrust-plate subassembly according to Claim 3 or 4, **characterized in that** the prestressing element (40) comprises a prestressing spring element which engages on the at least one play transmitter (28) and which is supported on an outer circumferential region (17) of the pressure plate (16).

6. Thrust-plate subassembly according to Claim 5, **characterized in that** the prestressing element (40) comprises a spring-elastically deformable, essentially U-shaped spring part (40), with a first U-leg (42) which is capable of being arranged on that side of the pressure plate (16) which faces away from the friction surface (18) and with which the spring part (40) engages on the play transmitter (28), with a second U-leg (44) which is capable of being arranged on the friction-surface side of the pressure plate (16), and with a bottom portion (46) which connects the first U-leg (42) and the second U-leg (44) and which is capable of being supported on an outer circumferential region (17) of the pressure plate (16).

7. Thrust-plate subassembly according to Claim 6, **characterized in that**, when the first U-leg (42) of the spring part (40) engages on the play transmitter (28) and the bottom portion (46) of said spring part engages on the outer circumferential region (17), this spring part (40) is put into a prestressed state in which it exerts a radially outward-directed force on the play transmitter (28).

8. Thrust-plate subassembly according to Claim 7, **characterized in that**, when the spring part (40) is in a state not mounted on the pressure plate (16), an angle formed between the first U-leg (42) and the bottom portion (46) has a first value (α) which is preferably smaller than 90°, and **in that**, when the spring part (40) is mounted on the pressure plate (16), the angle has a second value (α') which is larger than the first value and is preferably in the region of 90°.

9. Thrust-plate subassembly according to Claim 1, **characterized in that** the spring part (40) has, in its first U-leg (42), a passage orifice (50), into which the wear detection portion (32) of the at least one play transmitter (28) is capable of being introduced and via which the spring part (40) engages on the wear detection portion (32) of the at least one play transmitter (28).

10. Thrust-plate subassembly according to one of Claims 1 to 9, comprising, furthermore, play-transmitter rotation-securing means (52, 54) on the prestressing element (40) for securing the at least one play transmitter (28) against rotation in the passage orifice (36) in the pressure plate (16) about an axis essentially parallel to the axis of rotation (A).

11. Thrust-plate subassembly according to Claim 6 and according to Claim 10, **characterized in that** the play-transmitter rotation-securing means (52, 54) comprise at least one securing portion (52, 54) preferably produced integrally with the first U-leg (42) and engaging on the actuating-lever portion (30) of the at least one play transmitter (28).

12. Thrust-plate subassembly according to Claim 6 and, if desired, according to another of the preceding claims, comprising, furthermore, spring part rotation-securing means (56, 58) for securing the spring part (40) against rotation about an axis essentially parallel to the axis of rotation (A).

13. Thrust-plate subassembly according to Claim 12, **characterized in that** the spring-part rotation-securing means (56, 58) comprise, on the pressure plate (16), a depression (56) which extends essentially radially and into which a U-leg (42) of the spring part (40) engages preferably with its radially inner end portion (58).

14. Thrust-plate subassembly according to Claim 13, **characterized in that** the depression (56) is provided on that side of the pressure plate (16) which faces away from the friction surface (18), and **in that** the first U-leg (42) of the spring part (40) engages with its radially inner end portion (58) into the depression (56).

15. Thrust-plate subassembly according to Claim 6 and, if desired, according to another of the preceding claims, **characterized in that** the spring part (40) consists of spring steel or the like.

16. Thrust-plate subassembly according to Claim 1, **characterized in that** the passage orifice (36) for the wear detection portion (32) of the at least one play transmitter (28) in the pressure plate (16) has a clamping-fit portion (38), and **in that** the clamping-fit portion (38) is arranged so as to be displaced in the axial direction from that side of the pressure plate (16) which faces away from the friction surface (18) towards the friction-surface side of the pressure plate (16).

17. Thrust-plate subassembly according to Claim 16, **characterized in that** the clamping-fit portion (38) in the passage orifice (36) in the pressure plate (16) is arranged adjacently to the friction-surface side of the pressure plate (16).

18. Thrust-plate subassembly according to Claim 1, **characterized in that** the passage orifice for the wear detection portion of the at least one play transmitter in the pressure plate has a clamping-fit portion, and **in that** the clamping-fit portion is arranged so as to be displaced in the axial direction from that side of the pressure plate on which the prestressing element engages on the at least one play transmitter towards the other axial side of the pressure plate in each case.

19. Thrust-plate subassembly according to Claim 1, **characterized in that** the prestressing element (40) comprises a spring-elastically deformable spring-clip part (40) of essentially U-shaped design.

## Revendications

1. Ensemble de plateau de pression, en particulier pour un embrayage à friction d'un véhicule automobile avec rattrapage d'usure automatique, comprenant
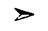 un boîtier, qui peut être assemblé ou qui est assemblé à une roue volante (14) en vue d'une rotation commune autour d'un axe de rotation (A),
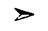 un plateau de pression (16) avec une face de friction (18), assemblé de manière fixe au boîtier (12) et pouvant être déplacé en direction axiale par rapport au boîtier (12) en vue de l'application sur des garnitures de friction d'un disque d'embrayage pouvant être serré entre la roue volante (14) et le plateau de pression (16),
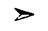 un accumulateur d'énergie (20), en particulier un ressort à membrane (20), qui agit entre le boîtier (12) et le plateau de pression (16) et qui met le plateau de pression (16) en précontrainte en direction d'une position embrayée de l'embrayage, l'accumulateur d'énergie (20) agissant sur le plateau de pression (16) avec interposition d'un dispositif de rattrapage d'usure (22),
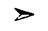 au moins un capteur de jeu (28) disposé sur le plateau de pression (16), avec une partie de levier de commande (30) coopérant avec le dispositif de rattrapage d'usure (22) et une partie de détection d'usure (32) coopérant de préférence avec la roue volante (14) pour la détection de l'usure et traversant une ouverture de passage (36) sensiblement axiale dans le plateau de pression (16), le capteur de jeu (28) pouvant être déplacé en direction axiale dans l'ouverture de passage (36) par rapport au plateau de pression (16), et au moins un élément de précontrainte (40) pour produire un effet de force sur le capteur de jeu (28), pour presser celui-ci en position de serrage par friction dans l'ouverture de passage (36) en vue de la fixation axiale du capteur de jeu (28) par rapport au plateau de pression (16),
**caractérisé en ce que** l'élément de précontrainte (40) exerce un effet de force orienté sensiblement perpendiculairement à l'axe de rotation (A) sur le au moins un capteur de jeu (28).

2. Ensemble de plateau de pression suivant la revendication 1, **caractérisé en ce que** l'élément de précontrainte (40) exerce un effet de force orienté en direction radiale, de préférence radiale vers l'extérieur, par rapport à l'axe de rotation (A), sur le au moins un capteur de jeu (28).

3. Ensemble de plateau de pression suivant la revendication 1 ou 2, **caractérisé en ce que** l'élément de précontrainte (40) est accroché au capteur de jeu (28) sur un côté du plateau de pression (16) situé à l'opposé de la face de friction (18).

4. Ensemble de plateau de pression suivant la revendication 3, **caractérisé en ce que** l'élément de précontrainte (40) est accroché à la partie de détection d'usure (32) du au moins un capteur de jeu (28).

5. Ensemble de plateau de pression suivant la revendication 3 ou 4, **caractérisé en ce que** l'élément de précontrainte (40) comprend un élément de ressort de précontrainte accroché audit au moins un capteur de jeu (28) et prenant appui sur une zone périphérique extérieure (17) du plateau de pression (16).

6. Ensemble de plateau de pression suivant la revendication 5, **caractérisé en ce que** l'élément de précontrainte (40) comprend une pièce de ressort (40) sensiblement en forme de U et déformable de manière élastique avec une première branche du U (42), qui peut être disposée sur le côté du plateau de pression (16) situé à l'opposé de la face de friction (18) et avec laquelle la pièce de ressort (40) est accrochée au capteur de jeu (28), une seconde branche du U (44), qui peut être disposée sur le côté de la face de friction du plateau de pression (16), et une portion de fond (46), reliant la première branche du U (42) et la seconde branche du U (44), qui peut prendre appui sur une région périphérique extérieure 17 du plateau de pression (16).

7. Ensemble de plateau de pression suivant la revendication 6, **caractérisé en ce que**, lorsque la première branche du U (42) est accrochée au capteur de jeu (28) et que la portion de fond (46) de la pièce de ressort (40) est accrochée à la région périphérique extérieure (17), cette pièce de ressort (40) est mise dans un état de précontrainte dans lequel elle exerce un force orientée en direction radiale vers l'extérieur sur le capteur de jeu (28).

8. Ensemble de plateau de pression suivant la revendication 7, **caractérisé en ce que**, dans une position de la pièce de ressort (40) non appliquée contre le plateau de pression (16), un angle formé entre la première branche du U (42) et la portion de fond (46) présente une première valeur (α), qui est de préférence inférieure à 90°, et **en ce que**, lorsque la pièce de ressort (40) est appliquée contre le plateau de pression (16), l'angle présente une seconde valeur (α'), qui est supérieure à la première valeur et qui se situe de préférence aux alentours de 90°.

9. Ensemble de plateau de pression suivant la revendication 1, **caractérisé en ce que** la pièce de ressort (40) présente dans sa première branche du U (42) une ouverture de passage (50), dans laquelle la partie de détection d'usure (32) du au moins un capteur de jeu (28) peut être introduite et par laquelle la pièce de ressort (40) est accrochée à la partie de détection d'usure (32) du au moins un capteur de jeu (28).

10. Ensemble de plateau de pression suivant l'une quelconque des revendications 1 à 9, comprenant en outre des moyens (52, 54) de blocage de la rotation du capteur de jeu sur l'élément de précontrainte (40), pour prémunir le au moins un capteur de jeu (28) contre la rotation dans l'ouverture de passage (36) du plateau de pression (16) autour d'un axe sensiblement parallèle à l'axe de rotation (A).

11. Ensemble de plateau de pression suivant la revendication 6 et suivant la revendication 10, **caractérisé en ce que** les moyens (52, 54) de blocage de la rotation du capteur de jeu comprennent au moins une partie de blocage (52, 54) de préférence intégrée à la première branche du U (42) et accrochée à la partie de levier de commande (30) du au moins un capteur de jeu (28).

12. Ensemble de plateau de pression suivant la revendication 6 et, si on le désire, suivant une autre des revendications précédentes, comprenant en outre des moyens (56, 58) de blocage de la rotation de la pièce de ressort, pour prémunir la pièce de ressort (40) contre la rotation autour d'un axe sensiblement parallèle à l'axe de rotation (A).

13. Ensemble de plateau de pression suivant la revendication 12, **caractérisé en ce que** les moyens (56, 58) de blocage de la rotation de la pièce de ressort comprennent une encoche (56) s'étendant sensiblement en direction radiale sur le plateau de pression (16), dans laquelle s'engage une branche du U (42) de la pièce de ressort (40), de préférence par sa portion d'extrémité radiale intérieure (58).

14. Ensemble de plateau de pression suivant la revendication 13, **caractérisé en ce que** l'encoche (56) est prévue sur le côté du plateau de pression (16) situé à l'opposé de la face de friction (18), et **en ce que** la première branche du U (42) de la pièce de ressort (40) est engagée dans l'encoche (56) par sa portion d'extrémité radiale intérieure (58).

15. Ensemble de plateau de pression suivant la revendication 6 et, si on le désire, suivant une autre des revendications précédentes, **caractérisé en ce que** la pièce de ressort (40) est constituée d'acier à ressorts ou analogue.

16. Ensemble de plateau de pression suivant la revendication 1, **caractérisé en ce que** l'ouverture de passage (36) pour la partie de détection d'usure (32) du au moins un capteur de jeu (28) dans le plateau de pression (16) présente une portion à ajustement serré (38) et **en ce que** la portion à ajustement serré (38) est disposée en position décalée en direction axiale en partant du côté du plateau de pression (16) situé à l'opposé de la face de friction (18) vers le côté de la face de friction du plateau de pression (16).

17. Ensemble de plateau de pression suivant la revendication 16, **caractérisé en ce que** la portion à ajustement serré (38) est disposée dans l'ouverture de passage (36) dans le plateau de pression (16) à proximité du côté de la face de friction du plateau de pression (16).

18. Ensemble de plateau de pression suivant la revendication 1, **caractérisé en ce que** l'ouverture de passage pour la partie de détection d'usure du au moins un capteur de jeu dans le plateau de pression présente une portion à ajustement serré, et **en ce que** la portion à ajustement serré est disposée en position décalée en direction axiale en partant du côté du plateau de pression auquel l'élément de précontrainte est accroché audit au moins un capteur de jeu, respectivement vers l'autre côté axial du plateau de pression.

19. Ensemble de plateau de pression suivant la revendication 1, **caractérisé en ce que** l'élément de précontrainte (40) comprend une pièce de serrage à ressort (40), déformable de façon élastique, ayant de préférence sensiblement une forme en U.
